# EUROPEAN PATENT SPECIFICATION

(11) **EP 3 935 359 B1**
(45) Date of publication and mention of the grant of the patent: **17.04.2024**
(21) Application number: 20707474.1
(22) Date of filing: 06.03.2020
(51) Int. Cl.: G01K 1/024, G01K 3/14, B63B 22/00

(54) **DEVICE FOR DETECTING TEMPERATURE PROFILES, AND RELATIVE MONITORING SYSTEM**
VORRICHTUNG ZUR ERFASSUNG VON TEMPERATURPROFILEN UND ENTSPRECHENDES ÜBERWACHUNGSSYSTEM
DISPOSITIF DE DÉTECTION DE PROFILS DE TEMPÉRATURE ET SYSTÈME DE SURVEILLANCE CORRESPONDANT

(30) Priority: 08.03.2019 IT 201900003391
(43) Date of publication of application: 12.01.2022
(73) Proprietor: Stazione Zoologica "Anton Dohrn", 80121 Napoli (IT)
(72) Inventor: PASSARELLI, Augusto, 80121 Napoli (IT); FORMISANO, Fabrizio, 80121 Napoli (IT); DE VITO, Saverio, 80121 Napoli (IT); ESPOSITO, Elena, 80121 Napoli (IT)
(74) Representative: Leone, Mario
(86) International application number: PCT/EP2020/056091
(87) International publication number: WO 2020/182683

(56) References cited:
- WO-A1-2018/112347
- KR-A- 20160 088 990
- KR-B1- 101 609 723
- US-A1- 2015 344 109
- US-A1- 2017 192 124
- GUOBAO XU ET AL: "Applications of Wireless Sensor Networks in Marine Environment Monitoring: A Survey", SENSORS, vol. 14, no. 9, 11 September 2014 (2014-09-11), pages 16932-16954, XP055643693, CH ISSN: 1424-8220, DOI: 10.3390/s140916932

## Description

### BACKGROUND OF THE INVENTION

### 1. Field of the invention

The present invention relates with a device for detecting temperature profiles, particularly on thicknesses of ice, snow or water, and to a relative monitoring system possibly using several detecting temperature devices.

### 2. State of the art

In certain kinds of climatic or environmental investigation, e.g. for reasons related to the analysis of the Antarctic trophic chains, it is requested to monitor the temperature profile of the Antarctic sea ice with high frequency. Furthermore, it is also necessary, for technical or safety reasons, to carry out such monitoring in a pervasive way with a significant level of accuracy, and also with a real-time detection, to check the ice tightness, for example to allow the landing of heavy aircraft during the summer Antarctic research campaigns.

Another example of application can be found in alpine-type scenarios, where there is a risk of avalanches, or in applications where it is requested to monitor the metamorphism of the snowpack, as in the case of monitoring of ski slopes in ski resorts. In such cases, it is required to detect, under certain condition of spacing and timing, a temperature gradient through the entire width of the snowpack.

These scenarios are therefore compatible with the need to have, for safety or research reasons, information on parameters both for the analysis of the stability of a hydrogeological mantle and for the analysis of chemical or biological processes existing in that mantle, with information that can be useful in the military, scientific research, rescue, transport industry and so on.

In all these cases the surveys are carried out with very low frequency monitoring systes, e.g. with a daily interval, by personnel who specifically go to several survey points, sometimes even inaccessible and hazardous, to guarantee the measurement.

The weather conditions and the associated high risk can also prevent staff from carrying out the required measures, even for several consecutive days, thus making the survey discontinuous.

In the specific prior art, systems providing the detection of the surface temperature or the thickness of snow or ice packs, or allowing the detection of ice and snow temperature profiles, are known, but such system are not usually provided with floating capabilities, thus making extremely difficult their recovery in case of loss or drift caused by the melting of e.g. glaciers, or in case of avalanches or landslides, possibly with a double transmission channel of the position thereof.

Furthermore, in the known detecting arrangements, the simultaneous presence of an internal data recorder, and of a suitable transmission systems, possibly with satellite-type backup transmission, is not provided, to ensure high reliability in temporary storage and data transmission, also in real time, in particular in adverse transmission conditions, such as in the case of obstacles, malfunction or isolation of a node and the like.

In a probe installed in 2011 at the Chukchi Sea in Barrow, Alaska (USA), a fixed system, not easily transportable, was used; relying on wind energy and not solar energy, data transmission via UHF at 900 MHz without a recovery systems with floating capablities and position transmission. Also, no artificial computational intelligence algorithms were used.

Kobbs et al., Novel monitoring of Antarctic ice shelf basal melting using a fiber-optic distributed temperature sensing mooring, AGU Geophysical Research Letters, 2014, pag.6779-6786, discloses a fiber optic survey system for high depths, without wireless transmission systems, without features that allow recovery in case of loss.

In Xiuhong Li et al., A Multi-Interface Ice and Snow Remote Monitoring Platform in the Polar Region, IEEE Sensors Journal, Volume 14, No. 11, november 2014, a monitoring system is described using satellite sensors, therefore not suitable for detecting the temperature profile in depth, and not having artificial computational intelligence algorithms.

Liqin Cui et al., Freshwater ice thickness apparatus based on differences in electrical resistance and temperature, Elsevier, Cold Regions Science and Technology, Volume 119, november 2015, Pag. 37-46, discloses a system to the detection of ice thicknesses of fresh water, typically in lakes, not having artificial computational intelligence algorithms.

E. Guizzo, Into deep ice [ice monitoring], IEEE Spectrum, Volume 42, No. 12, dicember 2005, pag. 28-35, discloses a monitoring system based on wireless probes, not operating in real time and not having features for physical recovery in case of loss, and without photovoltaic charging systems, multi-hop transmission, or algorithms of artificial computational intelligence.

U.S. Patent Application No. 2011/076904 A1 discloses a buoy which is only battery powered, with sensors of various types, and which is intended to be inserted in sea ice, equipped with a satellite-type transmitter-receiver and does not incorporate the concept of sensor network.

Chinese patent application No. 10128567 A discloses a single miniaturized sensor for the continuous acquisition and transmission of data relating to ice thickness, but without any reference to the ice temperature.

Chinese patent application No. 101303220 A discloses a single miniaturized sensor for continuous acquisition and single chip transmission of ice thickness and temperature data, but it is not applicable in case of sea ice.

Chinese patent application No. 1560560 A discloses a single miniaturized sensor for continuous acquisition and transmission of ice thickness data, but without any reference to the ice temperature.

Chinese patent application No. 202511782 A discloses a method and transducer device for measuring, processing, transmitting, many different types of data among them temperature profiles in frozen soils, but the concept of network is not described, even related to floating capabilities.

Chinese patent application No. 202329584 A discloses a system for detecting the thickness and temperature profile of the snow of greater dimensions and complexity, without floating capabilities, which has no multi-hop transmission and it is not suitable for pervasive monitoring.

Chinese patent application No. 2074451 A discloses a multilayer probe, without recovery and anomaly detection features for logging, transmission and operating capability.

Chinese patent applications No. 201955086 A, No. 201037769 A and No. 201852611 A disclose systems for monitoring the underwater temperature profiles under ice, not compatible to the use conditions of the present invention.

U.S. Patent No. 3,635,087 A discloses a system for detecting the temperature profile only in heated case using a mobile system controlled by an electric motor, but it does not have multi-hop wireless transmission capability.

Chinese patent application No. 102042883 A discloses a temperature sensor for carbon rock, with a precise detection but does not have data recording or wireless transmission capabilities.

European patent application No. 2,813,870 A discloses a system for detecting the temperature profile and thickness of a layer of snow but it does not have multi-hop transmission capabilities; in addition, the combined optical sensors are used as level sensors.

Canadian Patent Application No. 2,889,827 A discloses a portable sensor system for snow, it can be used by an operator with a smartphone or short-range network acquisition system to store data in a server. Therefore, it is not a stand-alone system with recovery and rescue capabilities.

European patent application No. 2,551,668 A discloses a measurement system for not only temperature profile, intended for snow, but does not foresee any recovery system nor a multi-hop transmission system.

Finally, Korean patent application No. KR 2016/0088990 A discloses a safety buoy for swimmers it has got a casing containing sensors and transmission devices, while U.S. patent application No. 2015 / 344.109 A1 discloses a buoy or a system of buoys connected to an underwater vehicle or another propulsion system, said buoys containing sensors and data transmission systems.

### SUMMARY OF THE INVENTION

The technical problem underlying the present invention is to provide a device for the detection of temperature profiles to overcome the drawback mentioned with reference to the prior art.

This problem is solved by a device for the detection of temperature profiles as defined in the annexed claim 1.

The main advantage of the device for the detection of temperature profiles according to this invention is to allow an autonomous operation within a network of coarse devices, with the opportunity to recover the devices lost for various operational factors.

The proposed system, achievable with small dimensions and therefore easily transportable, ensures the possibility to remotely measure, with modular spatial density and therefore with pervasive measurements, the temperature profile of the thickness of the hydrogeological mantle to be observed, for example an ice cap, at different depths.

It is equipped with multi-sensor detection capability, to identify possible anomalies, temperature data, any chemical/physical/biological markers, which can be exploited using artificial computational intelligence algorithms, for example, neural networks, and reliable data transmission, also remotely, with distances over one kilometer.

The system feature also ensure the possibility to locate it in particular backgrounds with high environmental issues, for example on sea ice, and in potentially adverse conditions, minimizing the chances of system and data losses, due, for example, to catabatic winds, melting of the ice sheet, slavine and so on.

The system, in fact, can be equipped with internal utilities to operate in harsh conditions and to be easily recovered in case of loss.

Data transmission can be based on the use of a mesh (multi-hop) and satellite network which, thanks to the ability of the single node to operate also as a repeater and router for twin systems distributed in the field, manages to form an acquisition network, with data redundancy, on large areas and long distances even in the presence of shielding obstacles.

In addition, there is the possibility to extend the transmission range, or to insure it even in highly unfavorable geological conditions, through the use of stand-alone intermediate repeaters, therefore without sensing capabilities, powered by battery and/or solar charging cells to be interposed between the sensor systems and the receiving station.

The system, therefore, as it has been designed, can also be used across all areas where there is a need for pervasive detection of multisensor profiles in ice, snow, and so on, at high frequency in adverse geological situations.

### BRIEF DESCRIPTION OF THE DRAWINGS

The present invention will be described below according to an example of its preferred realization, provided for example and not limited with reference to the attached drawings in which:
* Figure 1 shows a block diagram describing a monitoring system according to the present invention;
* Figure 2 shows a schematic perspective view of a device for the detection of temperature profiles according to the present invention;
* Figure 3 is a block diagram describing the algorithm executed by a software internal to the device of the above figures; and
* Figure 4 shows an example of an operational scenario of operation of a device network from the above figures.

### DESCRIPTION OF A PREFERRED EMBODIMENT OF THE INVENTION

With reference to the drawing, a device for the detection of temperature profiles is indicated as 1; it is designed to measure the temperature of ice, snow, water, soil, in harsh environmental conditions, and it is designed to be, together with other similar devices, part of an integrated system for the environmental data measurement.

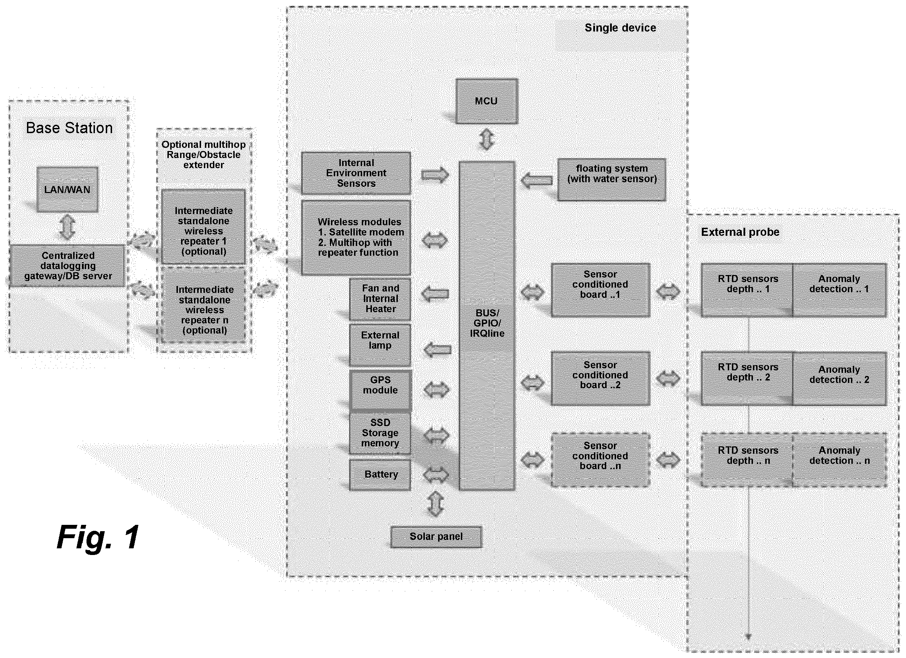

Figure 1 shows a block diagram describing a monitoring system according to this invention. As it can be seen, the single field sensor device consists of:
- a processor for the sensors control and conditioning, as well as for the related data processing;
- an internal and external power supply unit, the internal part of which includes at least one rechargeable battery and the external part of which includes a photovoltaic panel, arranged to the battery recharge,
- an implementation section;
- several external and internal sensor units; and
- a wireless communication unit, multi-hop type.

A multi-hop communications system (multi-hop routing) is a radio communications network in which the coverage area of the overall network is greater than the sum of the coverage areas resulting from the radio ranges of the individual nodes.

Since a radio receiver is a high-power consumption component in a system communication, greater if designed for long distance communications, in case of detection nodes scattered over a large area a multi-hop type communication system may be more efficient than a single-hop type system.

Therefore, this communication system is very suitable for networking several devices according to the present invention.

The above components, except for the external sensors of the device, are contained in a watertight protective case or container, thermally insulated and equipped with a floating system and with a light-buoy-type visual signaling.

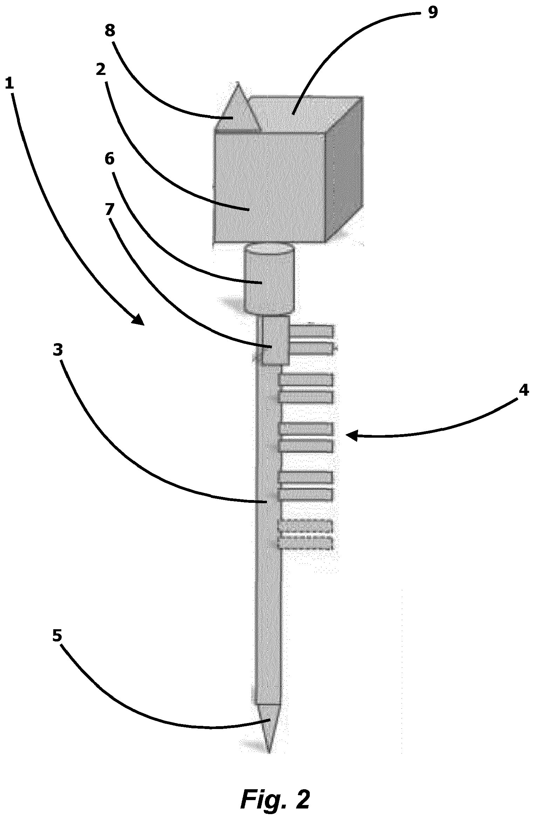

Figure 2 shows the device indicated by 1. It includes the above-mentioned case 2, which is thermally insulated and watertight; the case 2 therefore contains at least one processor board (CPU), realizing the processor for the control and the conditioning of the sensors, for the data processing and for the actuating section, for multi-hop wireless communication resources, and to detect a global positioning signal (GPS) with at least one antenna.

The case 2 has basically a box-like shape and, since it is sealed and mainly empty, it carries out a floating system of the monitoring device, designed so as to keep it in a preset position, since the heavier components, which will be detailed below, are connected to a single face of the case, which is intended to be the immersed portion of the device in case of floating.

There may be different buoyancy accessories, such as specific floats surrounding the case 2, made of sealed foam material, which ensure an appropriate vertical positioning when the device is submerged.

This submerged part includes at least a stand 3 for the external sensors including, as it will appear in more detail below, one or more temperature sensor 4.

The face of the case 2 to which the sensor stand 3 is connected represents the lower surface, therefore opposed to an upper surface, designed to remain emerged in buoyancy case, and which includes a photovoltaic panel 9 for the battery charging, energy supplying the device.

At this upper surface, the device 1 also includes a signal lamp 8, e.g. of LED-type, emitting flashing light pulses, which, in this pre-established position, is located at the top of device 1.

The sensor stand 3 has a tubular structure that provides an internal duct, and on its external surface it includes a sensors positioning rail, to place them at different levels.

The tubular structure is flexible and it includes a fixing tip 5 at one end. At each fixed depth for detection, device 1 includes a multi-sensor card 7 for data collection, suitably enclosed in a sealed cover.

Between the tubular structure and the case 2 a spacer 6 is provided, including a hygrometric immersion sensor, which detects the water presence and it is able to report to the CPU that the case 2 of the device 1 is actually immersed in water, and that the device floats and therefore it may move.

Inside the case 2 there is a thermal accumulator providing an additional thermal capacity to reduce any possible internal temperature fluctuation when high difference between minimum and maximum temperatures outside occurs.

When the solar irradiation exceeds a nominal value, which is necessary to charge the electrochemical energy storage, the additionally received thermal energy is stored with the photovoltaic-electrical heater line, so as to require a minimum intervention of the electrochemical storage for heating in conditions of minimum temperature.

The processor includes a board with a microcontroller (MCU) that executes the algorithm, the control and the transmission; it also contains interfacing and conditioning boards with the different sensors.

The battery, providing electrical power to the system, consists of a chemical type electrical storage system, preferably lithium-polymer batteries, rechargeable through a simple connection port, e.g. a USB port, and a photovoltaic panel system echarging the battery on site, when in the presence of solar radiation.

The internal sensor units, therefore those not located at the external probe, mainly consist of a low consumption temperature sensor, a water presence sensor, a hygrometer, and a ground contact sensor. They provide signals sent to the processor to identify the operation strategies of the internal heater, including a cooling fan, of the external light signal, and of the management of the recovery phase, providing a data transmission for the device localization, in case of anomalous displacement or immersion due to the melting of the supporting ice or snow.

The external sensor unit consists of a multi-sensor and multi-stage sensing probe: it can be assembled by fastening of several basic elements containing the sensors on a single, flexible and easily transportable rail and can be assembled on site. The flexibility of the support also allows compatibility with strain, displacement, inclination sensors such as strain gauges, accelerometers and so on.

Sensors are contained in a plastic case having a high resistance to mechanical stress and to unfavorable environmental conditions like extreme temperature variations, UV irradiance, corrosion, salt water, and so on. A single plastic case may contain more sensor types: at least one temperature sensors, preferably of the thermistor type (RTD), an extensometer, a humidity sensor, an optical sensors and so on.

In particular, couples of primary sensors are provided, each sensor of the couple intende to monitor primary parameters like temperatures, deformation, etc., and secondary sensors or anomaly detection sensors are provided too (see figure 1), e.g. hygrometric sensors and optical sensors detecting possible deployment anomalies with respect to the ice or snow support.

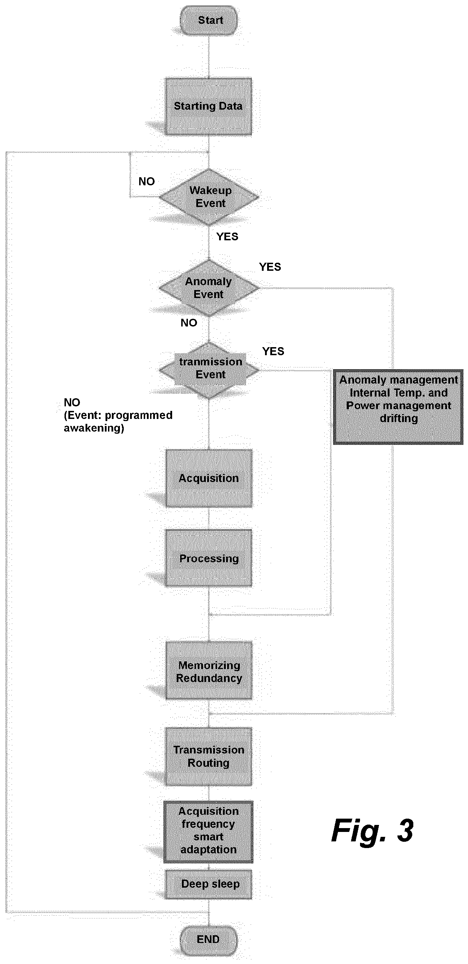

The processor hosts a software that implements the algorithm described in figure 3. It allows the management of data sampling and acquisition, processing, storage, routing and reliable transmission. It also allows to detect and manage the data flow when anomaly conditions arise, as well as all the reactive actions to be undertaken.

The data processing aimed to critical phases or useful information data pattern recognition, as temperature profiles reconstruction and analysis based on primary and secondary sensors, anomalies, sampling frequency adaptations to relevant events, but above all the practicability alarm signals and, more generally, the forecasting of alarm conditions based on local or pervasive data, will use artificial computational intelligence components (e.g. neural networks) as trained in ad-hoc training sessions devised for specific use case scenarios.

The preferred choice for the on board and on cloud computational intelligence components are *shallow neural networks* because of the renowned *conciseness* in knowledge representation of these architectures and their limited computation complexity which particularly useful for on board implementation.

Figure 3 shows the different phases of the intelligent power management phases. Actually, beside managing the available charge through its PV panel and electrochemical battery, the device manages its energy surplus through thermal capacity.

Furthermore, when inactive, the device automatically goes in a minimum power consumption state or *stand by,* maximizing the duration of its energy supply. Sampling frequency is fixed as an initial input parameter but can be gradually and automatically increased as a function of the sensing parameter (e.g. temperature, inclination, deformation, displacement) variation. This allow the sampling of an increased amount of information as well as to reconstruct events that are characterized by a faster dynamic with respect to the one initially foreseen for the monitored phenomena. As an example, we can refer to temperature monitoring just before and immediately after a breakup of the ice layer due to high temperatures.

Furthermore, the intelligent power management system can gradually, and automatically, lower the sampling frequency whenever the battery status in terms of remaining power will become lower of a predefined threshold.

The sampling management phase include the sampling and sequential polling of the N external probe sensors. Then, the monitoring device 1 will manage, through the signal conditioning board, the setup phase the signal conditioning phase, the sampling phase and the anomaly detection phase (cable anomalies, threshold crossing, sensors displacement) of each sensor.

The storing and transmission phase allow the implementation of a system that is actually capable to store interesting data on a solid state memory device (SSD), enjoying the additional redundancy of neighbouring systems and, when sufficient transmission and power conditions apply, to transmit data through multihop communication link or even through satellite links, to the base station. When, in anomaly states, e.g. when low power availability or adverse channel conditions do not allow data transmission, the system is capable to buffer the data locally and re-transmit it as soon as optimal conditions are restored.

Anomaly detection phase management is based on a sensor array which are capable to awaken the MCU board from a standby condition using ad-hoc IRQ lines so to enforce adequate actions to cope with the detected anomaly.

In particular, the internal temperature sensors as well as the water and ground contact sensors will implement this functionality. In fact, whenever default internal temperature range thresholds are crossed, the system is awakened and, after a positive evaluation of sufficient power availability conditions, it will activate refreshing fan or internal heating subsystem until nominal conditions are restored.

Whenever a water, snow or ice contact is detected, the system also awakens and activates the GPS subunit. Through positioning information, the MCU is capable to detect drifting conditions by comparing with initial position and discriminate this condition form simple box support breakup.

Whenever adrift or loss, the system itself transmits all locally stored data that had not been transmitted befor,e selecting the most appropriate channel among multi-hop and satellite channel. Furthermore, it will transmit its position through satellite links at preset intervals and will light up the external flashing light to facilitate system rescue operations.

In case of case support breakup, the system, after data transmission, will transmit anomaly detection message going in wait conditions, awaiting for maintenance operations.

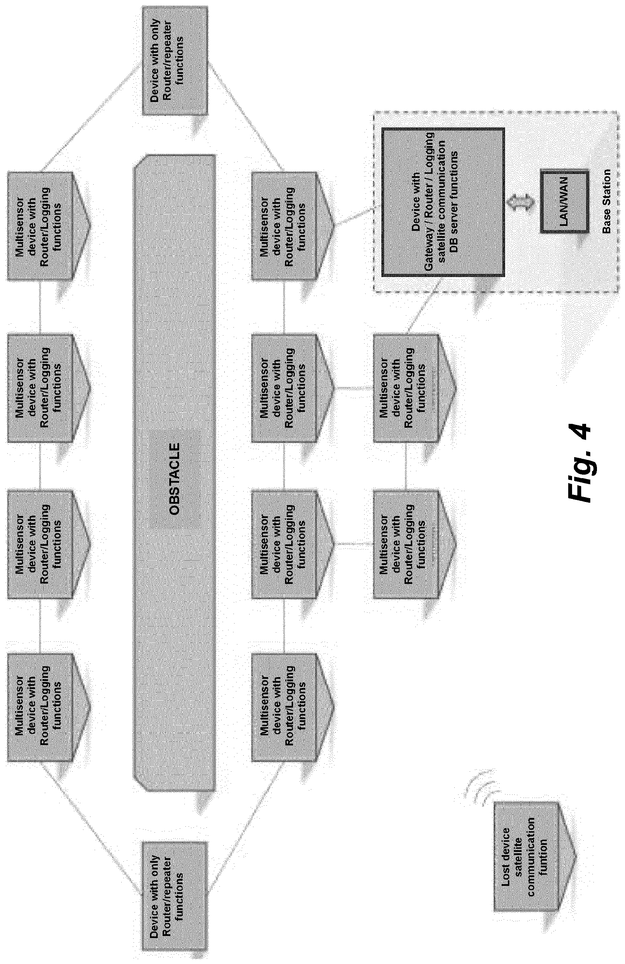

Figure 4 shows an operative deployment scenario concerning a device network.

As an example, in this specific system, indicated as 10, a high frequency pervasive sampling of temperature profiles is carried out, i.e. at different depth levels, as well as its wireless transmission and/or ice pack sensor anomalies and/or drifting/displacement conditions for facilitating rescue operations thanks to the floating system and localization capability as well as the availability of double multihop/satellite data/anomaly/ position transmission link.

Furthermore, a *datalogger* is provided with network or satellite transmission capabilities and data redundancy management capability that is also capable of routing and repeater functionality to the benefit of twin systems so to guarantee a high *fault tolerance* level and reliable real time transmission capabilities in adverse geo or weather conditions.

Aftwerward, an intelligent power and climatic management system for thermal variability management within case 2 based on the use of thermal accumulation, thermostat and cooling fan.

In this way, it will be possible for the system to smartly adapt the sampling frequency based on available energy and monitored parameter dynamic analysis.

The system can also implement the monitoring at different depth levels of further physical/chemical/biological parameters including, but not limiting to, light intensity, fluorescence, deformation and so on. It is furthermore possible to detect and monitor the snow profile at different depth levels.

The above described device and system of devices can be used for environmental monitoring, in sport and tourism industry, in the military and civil protection sector, in scientific research, in transport sector, for SAR and emergency management operations.

As such they could be used, as an example, by industries or enterprises specialized in environmental or hydrogeological monitoring activity, in environmental and/or hydrological and/or hydrogeomatic safety and security devices, by winter sport companies, research, military, and SAR teams.

A man skilled in the art could modify the above mentioned temperatures profile monitoring device, by making several modifications and variations, to the purpose of coping with further and contingent requirements, all of the above should be considered as covered by the present invention protection, as defined by the attached claims.

## Claims

1. Device (1) for monitoring the temperature including:
at least a thermally insulated and watertight case (2), including at least a CPU board, having a processor and a memory containing a data sampling, processing, storage, routing and transmission software to be run by said processor, at least a battery, a wireless multihop communication systems and a global positioning detection system with at least one antenna, said wireless multihop communication systems and said global positioning detection system being configured to be kept in a minimum power consumption state when inactive, the case (2) being designed as a floating system wherein the case (2) is adapted to float in a predetermined position;
at least one stand (3), projecting from the case (2), said at least one stand (3) supporting one or more external sesors including one or more temperature sensors, said at least one stand (3) being configured to be submerged when the case (2) floats, said CPU board being configured to sample data from said one or more temperature sensors; and
a charging system, for charging said at least battery, said charging system including a photovoltaic panel,
said device being **characterised in that**
said thermally insulated and watertight case further comprises a low-power sensor array, connected to said CPU board, including at least an internal temperature sensor, a water presence sensor and a ground contact sensor;
and **in that** said software causes said processor to:
detect and manage a data stream from said low-power sensor array, said data stream being related with anomaly conditions and related reactive actions,
emit a signal to awake said wireless multihop communication system and said global positioning detection system from said minimum power consumption state, when said internal temperature and said ground contact sensor detect water contact and a floating condition,
after emitting said signal to awake said wireless multihop communication system and said global positioning detection system, allow the wireless multihop communication systems to transmit the positioning data and sampled data which are locally stored and have yet to be transmitted.

2. Device (1) according to claim 1, comprising a flashing light (8) which, in a floating condition, is positioned at the top of the device.

3. Device (1) according to claim 1, wherein, inside the case (2) a thermal accumulation device is placed, to provide an additional thermal capacity so as to mitigate internal thermal excursions, wherein the tthermal accumulation device is configured to store a surplus of energy received from said charging system.

4. Device (1) according to claim 1, wherein at least a battery providing power supply is built up by a chemical electrical power accumulation system, preferably based on Lithium-Polymer type.

5. Device (1) according to claim 1, wherein said low-power sensor array further includes a relative humidity sensor and a hygrometer.

6. Device (1) according to claim 1, wherein said external sensors are embedded in a plastic casing having a high resistance to mechanical and environmental stress.

7. Device (1) according to claim 6, wherein said plastic casing houses additional sensors selected among temperature sensors, preferably thermal resistance sensor (RTD), humidity sensors, optical sensors for detecting the presence of water or snow, extensometers.

8. Device (1) according to claim 1, wherein said wireless communication systems includes a satellite communication system.

9. Device (1) according to claim 1, wherein said software includes and implements computational intelligence algorithms devoted to local detection of monitored conditions anomalies and/or to locally forecasting relevant conditions.

10. Device (1) according to claim 9, wherein said computational intelligence algorithms are based on *shallow or deep neural networks.*

11. Device (1) according to claim 1, wherein said software includes a sampling frequency as a preset input parameter, wherein said sampling frequency is configured to gradually increase, as a function of the variation of the relevant monitored parameter, and to decrease whenever the charge state of the said battery decreases under preset alert threshold levels.

12. Device (1) according to claim 1, wherein the low power sensor array is connected to the CPU board through IRQ lines.

13. Monitoring system (10), comprising several multiple device (1) for temperature profiles monitoring of any of the previous claims.

## Patentansprüche

1. Vorrichtung (1) zur Überwachung der Temperatur aufweisend:
mindestens ein wärmeisoliertes und wasserdichtes Gehäuse (2), einschließlich mindestens einer CPU-Platine, mit einem Prozessor und einem Speicher, der eine Software zur Datenabtastung, -verarbeitung, -speicherung, -lenkung und -übertragung enthält, die von dem Prozessor ausgeführt werden soll, mindestens eine Batterie, drahtlose Multihop-Kommunikationssysteme und ein globales Positionsbestimmungssystem mit mindestens einer Antenne, wobei die drahtlosen Multihop-Kommunikationssysteme und das globale Positionsbestimmungssystem so konfiguriert sind, dass sie in einem Zustand mit minimalem Energieverbrauch gehalten werden, wenn sie inaktiv sind, wobei das Gehäuse (2) als schwimmendes System ausgebildet ist, wobei das Gehäuse (2) in einer vorbestimmten Position schwimmen kann;
mindestens einen Ständer (3), der von dem Gehäuse (2) abragt, wobei der mindestens eine Ständer (3) einen oder mehrere externe Sensoren trägt, einschließlich eines oder mehrerer Temperatursensoren, wobei der mindestens eine Ständer (3) so konfiguriert ist, dass er untergetaucht wird, wenn das Gehäuse (2) schwimmt, wobei die CPU-Platine so konfiguriert ist, dass sie Daten von dem einen oder mehreren Temperatursensoren abtastet; und
ein Ladesystem zum Aufladen der mindestens einen Batterie, wobei das Ladesystem ein Photovoltaikpanel umfasst,
wobei die Vorrichtung **dadurch gekennzeichnet ist, dass**
das wärmeisolierte und wasserdichte Gehäuse weiterhin aufweist eine Sensoranordnung mit geringem Energieverbrauch, die mit der CPU-Platine verbunden ist, aufweisend mindestens einen internen Temperatursensor, einen Sensor für die Anwesenheit von Wasser und einen Grundkontaktsensor;
dass die Software den Prozessor veranlasst, um:
einen Datenstrom von der Sensoranordnung mit geringem Energieverbrauch zu erkennen und zu verwalten, wobei der Datenstrom bezogen ist auf Anomaliebedingungen und reaktive Maßnahmen,
ein Signal auszusenden, um das drahtlose Multihop-Kommunikationssystem und das globale Positionsbestimmungssystem zu aktivieren aus dem Zustand des minimalen Energieverbrauchs, wenn der interne Temperatur- und der Grundkontaktsensor Wasserkontakt und einen Schwimmzustand erkennt,
nach dem Emittieren des Signals das drahtlose Multihop-Kommunikationssystem und das globale Positionsbestimmungssystem zu aktivieren, es den Multihop-Kommunikationssystemen zu ermöglichen, die Ortungsdaten und abgetasteten Daten zu übertragen, die lokal gespeichert sind und noch übermittelt werden müssen.

2. Vorrichtung (1) nach Anspruch 1, aufweisend ein blinkendes Licht (8), dass sich im schwimmenden Zustand oben auf der Vorrichtung befindet.

3. Vorrichtung (1) nach Anspruch 1, wobei im Inneren des Gehäuses (2) eine thermische Akkumulationsvorrichtung angeordnet ist, um eine zusätzliche thermische Kapazität bereitzustellen, um interne thermische Exkursionen abzumildern, wobei die thermische Akkumulationsvorrichtung so konfiguriert ist, dass sie einen Überschuss von vom Ladesystem empfangener Energie speichert.

4. Vorrichtung (1) nach Anspruch 1, wobei mindestens eine Batterie für die Energieversorgung aufgebaut ist durch ein chemisch-elektrisches Energie-Akkumulationssystem, vorzugsweise auf der Basis von Lithium-Polymer.

5. Vorrichtung (1) nach Anspruch 1, wobei die Sensoranordnung mit geringem Energieverbrauch weiterhin einen Sensor für die relative Luftfeuchtigkeit und ein Hygrometer aufweist.

6. Vorrichtung (1) nach Anspruch 1, wobei die externen Sensoren in ein Kunststoffgehäuse eingebettet sind, das eine hohe Widerstandsfähigkeit gegen mechanische und umweltbedingte Belastungen aufweist.

7. Vorrichtung (1) nach Anspruch 6, wobei das Kunststoffgehäuse zusätzliche Sensoren aufnimmt, ausgewählt aus Temperatursensoren, vorzugswiese thermischen Widerstandssensoren (RTD), Feuchtigkeitssensoren, optischen Sensoren zum Erfassen der Anwesenheit von Wasser oder Schnee, Dehnungsmessern.

8. Vorrichtung (1) nach Anspruch 1, wobei das drahtlose Kommunikationssystem eine Satellitenkommunikation umfasst.

9. Vorrichtung (1) nach Anspruch 1, wobei die Software enthält und implementiert Algorithmen der rechnergestützten Intelligenz, die sich mit der lokalen Erfassung von überwachten Bedingungsanomalien und/oder auf lokale Vorhersagen relevanter Bedingungen befassen.

10. Vorrichtung nach Anspruch 9, wobei die Algorithmen der rechnergestützten Intelligenz *auf flachen oder tiefen neuronalen Netzen* basieren.

11. Vorrichtung (1) nach Anspruch 1, wobei die Software eine Abtastfrequenz als voreingestellten Eingabeparameter umfasst, wobei die Abtastfrequenz konfiguriert ist zum graduellen Anwachsen, als eine Funktion der Änderung des betreffenden überwachten Parameters, und zum Abnehmen, wenn der Ladungszustand der Batterie unter festgelegte Alarmschwellenwerte sinkt.

12. Vorrichtung (1) nach Anspruch 1, wobei die Sensoranordnung mit geringem Energieverbrauch über IRQ-Leitungen mit der CPU-Platine verbunden ist.

13. Überwachungssystem (10), aufweisend mehrere mehrfache Vorrichtungen (1) zur Überwachung von Temperaturprofilen nach einem der vorhergehenden Ansprüche.

## Revendications

1. Dispositif (1) destiné à surveiller la température comprenant :
au moins un boîtier isolé thermiquement et étanche à l'eau (2), comprenant au moins une carte de CPU, ayant un processeur et une mémoire contenant un logiciel d'échantillonnage, de traitement, de stockage, de routage et de transmission de données à exécuter par ledit processeur, au moins une batterie, un système de communication sans fil à plusieurs bonds et un système de détection de positionnement global avec au moins une antenne, ledit système de communication sans fil à plusieurs bonds et ledit système de détection de positionnement global étant configurés pour être maintenus dans un état de consommation d'énergie minimum lorsqu'ils sont inactifs, le boîtier (2) étant conçu comme un système flottant dans lequel le boîtier (2) est adapté pour flotter dans une position prédéterminée ;
au moins un support (3), qui s'étend à partir du boîtier (2), ledit au moins un support (3) supportant un ou plusieurs capteur(s) externe(s) comprenant un ou plusieurs capteur(s) de température, ledit au moins un support (3) étant configuré pour être submergé lorsque le boîtier (2) flotte, ladite carte de CPU étant configurée pour échantillonner des données fournies par ledit ou lesdits capteur(s) de température ; et
un système de chargement, destiné à charger ladite au moins batterie, ledit système de chargement comprenant un panneau photovoltaïque,
ledit dispositif étant **caractérisé en ce que**
ledit boîtier isolé thermiquement et étanche à l'eau comprend en outre un réseau de capteurs à faible puissance, relié à ladite carte de CPU, comprenant au moins un capteur de température interne, un capteur de présence d'eau et un capteur de contact avec le sol ;
et **en ce que** ledit logiciel permet audit processeur de :
détecter et gérer un flux de données qui provient dudit réseau de capteurs à faible puissance, ledit flux de données étant lié à des conditions d'anomalie et des mesures réactives associées,
émettre un signal afin de déclencher ledit système de communication sans fil à plusieurs bonds et ledit système de détection de positionnement global à partir dudit état de consommation d'énergie minimum, lorsque ledit capteur de température interne et ledit capteur de contact avec le sol détectent un contact avec de l'eau et une condition de flottement,
après l'émission dudit signal destiné à déclencher ledit système de communication sans fil à plusieurs bonds et ledit système de détection de positionnement global, autoriser le système de communication sans fil à plusieurs bonds à transmettre les données de positionnement et les données échantillonnées qui sont stockées localement et doivent encore être transmises.

2. Dispositif (1) selon la revendication 1, comprenant une lumière clignotante (8) qui, dans une condition de flottement, est positionnée au niveau de la partie supérieure du dispositif.

3. Dispositif (1) selon la revendication 1, dans lequel, à l'intérieur du boîtier (2), un dispositif d'accumulation thermique est placé, afin d'offrir une capacité thermique supplémentaire de façon à limiter les excursions thermiques internes, dans lequel le dispositif d'accumulation thermique est configuré pour stocker un surplus d'énergie reçu de la part dudit système de chargement.

4. Dispositif (1) selon la revendication 1, dans lequel au moins une batterie qui fournit de l'énergie est composée d'un système d'accumulation d'énergie électrique chimique, de préférence de type lithium-polymère.

5. Dispositif (1) selon la revendication 1, dans lequel ledit réseau de capteurs à faible puissance comprend en outre un capteur d'humidité relative et un hygromètre.

6. Dispositif (1) selon la revendication 1, dans lequel lesdits capteurs externes sont intégrés à un boîtier en plastique qui présente une résistance élevée aux contraintes mécaniques et environnementales.

7. Dispositif (1) selon la revendication 6, dans lequel ledit boîtier en plastique contient des capteurs supplémentaires choisis parmi des capteurs de température, de préférence un capteur de résistance thermique (RTD), des capteurs d'humidité, des capteurs optiques destinés à détecter la présence d'eau ou de neige, des extensomètres.

8. Dispositif (1) selon la revendication 1, dans lequel ledit système de communication sans fil comprend un système de communication par satellite.

9. Dispositif (1) selon la revendication 1, dans lequel ledit logiciel comprend et met en oeuvre des algorithmes d'intelligence informatique dédiés à la détection locale d'anomalies des conditions surveillées et/ou aux prévisions locales de conditions pertinentes.

10. Dispositif (1) selon la revendication 9, dans lequel lesdits algorithmes d'intelligence informatique reposent sur des *réseaux neuronaux superficiels ou profonds.*

11. Dispositif (1) selon la revendication 1, dans lequel ledit logiciel comprend une fréquence d'échantillonnage en guise de paramètre d'entrée prédéfini, dans lequel ladite fréquence d'échantillonnage est configurée pour augmenter progressivement, en fonction de la variation du paramètre surveillé pertinent, et pour diminuer lorsque l'état de charge de ladite batterie diminue en-dessous de niveaux de seuil d'alerte prédéfinis.

12. Dispositif (1) selon la revendication 1, dans lequel le réseau de capteurs à faible puissance est relié à la carte de CPU par des lignes IRQ.

13. Système de surveillance (10), comprenant plusieurs dispositifs (1) de surveillance de profils de température selon l'une quelconque des revendications précédentes.
